# EUROPÄISCHE PATENTANMELDUNG

(11) **EP 1 362 636 A2**
(43) Veröffentlichungstag der Anmeldung: **19.11.2003**
(21) Anmeldenummer: 03006518.9
(22) Anmeldetag: 22.03.2003
(51) Int. Cl.: B01J 19/32

(54) **Packung für Wärme- und Stoffaustausch**

(30) Priorität: 16.05.2002 DE 10221761
(71) Anmelder: JULIUS MONTZ GmbH, D-40723 Hilden (DE)
(72) Erfinder: Zich, Egon, 42799 Leichlingen (DE); Jansen, Helmut, 41542 Dormagen (DE); Rietfort, Thomas, 41552 Dormagen (DE); Kaibel, Björn, 40723 Hilden (DE)
(74) Vertreter: COHAUSZ DAWIDOWICZ HANNIG & PARTNER

(57) **Zusammenfassung**

Die Erfindung betrifft eine Packung für den Wärme und/oder Stoffaustausch zwischen Flüssigkeiten und Gasen in Kolonnen, wobei das Packungsbett einzelne Packungslagen aufweist. In den Packungen weisen die Bleche unterschiedliche Dicken auf.

## Beschreibung

Die Erfindung betrifft eine Packung für den Wärme und/oder Stoffaustausch zwischen Flüssigkeiten und Gasen in Kolonnen, wobei das Packungsbett einzelne Packungslagen aufweist.

Bei Destillationen, Absorptionen, Gaswäschen und ähnlichen verfahrenstechnischen Operationen werden Kolonnen eingesetzt, die Einbauten für den Wärme- und Stoffaustausch zwischen Flüssigkeit und Gas enthalten. Diese Einbauten bestehen entweder aus Böden, wie beispielsweise Glockenböden, Siebböden oder Ventilböden, aus regellos angeordneten Füllkörpern, wie beispielsweise Raschigringen, Pallringen oder Sattelkörpern, oder aus geordneten Packungen.

Bei den geordneten Packungen haben sich Geometrien in Kreuzkanalstruktur in der technischen Anwendung breit durchgesetzt. Wie allgemein bei Füllkörper- und Packungskolonnen wird die Maximalkapazität auch bei den geordneten Packungen in Kreuzkanalstruktur durch das Eintreten des Flutzustands begrenzt. Die visuelle Beobachtung des Flutzustandes in Destillationskolonnen, die mit Packungen in Kreuzkanalstruktur ausgerüstet sind, zeigt, dass das Fluten stets am unteren Rand der einzelnen Packungslagen ausgelöst wird. Um die Leistungsfähigkeit dieser Packungen zu steigern, versucht man, den unteren und teilweise zusätzlich den oberen Rand der einzelnen Packungslagen zu modifizieren, um den erzielbaren Durchsatz an Flüssigkeit und Gas zu steigern. Hierzu ist es aus der EP 858 830 A1 bekannt, den Abstand benachbarter Packungselemente am unteren Rand der Packungslagen zu erhöhen, indem man dort die Knickhöhe verringert. Als weitere Möglichkeit ist beschrieben, einen Teil des Materials beispielsweise bei jedem zweiten Packungselement am unteren Ende der Packungslagen teilweise oder ganz zu entfernen.

In der WO 97/16247 ist eine alternative Möglichkeit geschildert, bei der die Geometrie der Kreuzkanalstruktur verändert wird. Die Knicke sind nicht mehr, wie üblich gerade, sondern S-förmig gestaltet und werden so angeordnet, dass die Knickrichtung am unteren und oberen Ende der Packungslagen annähernd vertikal verläuft. Die DE 100 01 694 A1 beschreibt eine ähnliche Packung, bei der die Knicke jedoch nur am unteren Rand in die vertikale Richtung abgebogen sind.

Bei aus Blech gefertigten Packungen versucht man unabhängig von den jeweiligen geometrischen Details der Packung, die Kosten durch eine Verringerung der Blechstärke zu senken. Derzeit werden von verschiedenen Herstellern die Blechstärken von ursprünglich etwa 0,15 bis 0,2 mm auf 0,075 bis 0,1 mm verringert. Vorteilhaft sind die hierdurch erzielten verringerten Materialkosten und das geringere Gewicht der Kolonneneinbauten. Nachteilig wirkt sich die Absenkung der Wandstärke auf die mechanische Stabilität, die bei der Stapelung maximal zu erzielende Packungshöhe und die Gefahr einer mechanischen Beschädigung der Packungen bei der Montage aus. Ungewollte Verformungen beeinträchtigen die Gleichverteilung der Flüssigkeit, verursachen Strähnenbildung und führen zu einem Verlust an Trennleistung.

Aufgabe der Erfindung ist es, eine Packung der eingangs genannten Art so zu verbessern, dass die Materialmenge und -kosten verringert sind, ohne die Leistungsfähigkeit und die Stabilität zu vermindern.

Diese Aufgabe wird erfindungsgemäß dadurch gelöst, dass in den Packungen die Bleche unterschiedliche Dicken aufweisen.

Damit sind die Packungen aus einzelnen Schichten zusammengesetzt, die nicht eine einheitliche, sondern eine voneinander abweichende Wandstärke aufweisen. Dies führt zu einer Einsparung an Material und Kosten und kann darüber hinaus zu geringen Abmessungen führen. Die mechanische Stabilität und Leistungsfähigkeit bleiben hierbei erhalten.

Ein Teil der Schichten - bevorzugt der überwiegende Anteil - wird mit dünner Wandstärke von 0,01 bis 0,2, bevorzugt mit 0,05 bis 0,1 mm ausgeführt. Ein weiterer Teil der Schichten - bevorzugt nur ein kleiner Anteil - wird mit einer größeren Wandstärke von 0,05 bis 0,5, bevorzugt 0,1 bis 0,2 mm ausgeführt. Dieser Anteil der Schichten übernimmt im Packungsverbund statische Funktionen und gewährleistet eine ausreichende mechanische Festigkeit. Das Verhältnis von dünnen zu dicken Schichten liegt bei etwa 20 : 1 bis 1 : 2, bevorzugt bei 15 : 1 bis 2 : 1, besonders bevorzugt bei 10 : 1 bis 5 : 1.

Die einzelnen Schichten werden bevorzugt in üblicher Weise mit Durchsteckstäben in horizontaler Richtung befestigt und zu einem Packungselement zusammengefasst. Ebenso können die üblichen Flüssigkeitsabstreifer am Rand der Packungselemente angebracht werden.

Es ist hinsichtlich der mechanischen Stabilität und Formhaftigkeit der Packungselemente günstig, wenn jeweils die außenliegenden Schichten die große Wandstärke aufweisen. Es können auch jeweils die beiden äußersten Schichten in der großen Wandstärke ausgeführt werden. Die verringerte Wandstärke eines Teils der Schichten wirkt sich positiv aus, indem ein verbesserter Kontakt zwischen den einzelnen Schichten erzielt wird, der die Spreitung der Flüssigkeit im Packungselement verbessert.

Ein weiterer Vorteil ergibt sich daraus, dass bei der Stapelung der einzelnen Packungselemente übereinander ein verbesserter Kontakt hergestellt wird, da einzelne Schichten, die auf Grund unvermeidlicher Fertigungsungenauigkeiten in vertikaler Richtung nach oben oder unten hervorstehen, bei der Montage am Rand stärker eingeknickt werden. Dadurch verringern sich die Spaltabstände in vertikaler Richtung zwischen den Packungselementen. Flüssigkeit aus oben liegenden Packungselementen kann sofort von den darunter liegenden Packungselementen aufgenommen werden. Das unerwünschte Querlaufen von Flüssigkeit am unteren Ende der Packungslagen bis zur nächsten entfernter liegenden Kontaktstelle wird vermieden und die Gleichverteilung der Flüssigkeit und damit die Trennleistung der Packungen verbessert. Dieser Effekt kann vorteilhaft durch Montagemaßnahmen verbessert werden, um die gewollte Verformung zu erreichen. Bei dem Einbau der Packungslagen werden die Lagen bevorzugt zusätzlich dynamisch (beispielsweise durch Klopfen) oder statisch (beispielsweise durch das Auflegen von Gewichten) so beschwert, dass sich die Zahl der Kontaktstellen vergrößert. Die Stärke dieser Maßnahmen richtet sich nach dem verwendeten Packungsmaterial und ist dem Fachmann bekannt.

Vorteilhafte Ausgestaltungen der Erfindung sind in den Unteransprüchen aufgeführt.

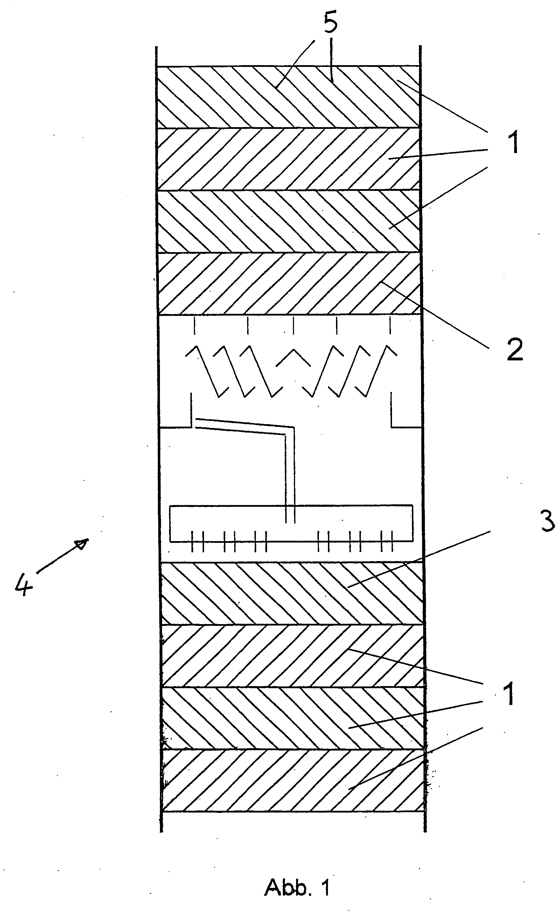

Ein Ausführungsbeispiel der Erfindung ist in der Zeichnung schematisch in einem Ausschnitt dargestellt und wird im folgenden näher beschrieben.

In einer Kolonne 4 sind mehrere Packungen 1 bis 3 waagerecht angeordnet, die einen Wärme- und/oder Stoffaustausch zwischen Flüssigkeiten und Gasen in Kreuzkanalstruktur erzeugen. Die Packungen sind aus einzelnen Packungslagen zusammengesetzt, die aus gewellten oder gefalteten Blechen 5 bestehen, wobei die Wellen, Rippen, Knicke oder Falten benachbarter Bleche zueinander quer bzw. einander kreuzend, das heißt um jeweils 60 bis 90 Grad verdreht, angeordnet sind.

Die einzelnen Schichten sind mit Durchsteckstäben befestigt und am Rand der Packungen sind Flüssigkeitsabstreifer angeordnet.

Bei zumindest mehreren Packungen bzw. Packungslagen 1 weisen die Bleche unterschiedliche Dicken (Wandstärken) auf. Ein Teil der Bleche 5, bevorzugt der überwiegende Anteil ist mit dünner Wandstärke von 0,01 bis 0,2, bevorzugt mit 0,05 bis 0,1 mm ausgeführt und ein weiterer Teil der Schichten, bevorzugt ein kleiner Anteil ist mit einer größeren Wandstärke von 0,05 bis 0,5, bevorzugt 0,1 bis 0,2 mm ausgeführt.

Die Packungen mit ungleichen Wandstärken können durch konventionelle Packungen mit gleichmäßiger Wandstärke ergänzt werden. Dabei wird die unterste Packungslage 2, die auf dem Auflagerost zu liegen kommt, in konventioneller Weise ausgeführt. Ebenso wird die oberste Lage 3 in konventioneller Weise ausgeführt. Dies vermeidet eine mögliche mechanische Beschädigung dieser beiden beim Einbau besonders beanspruchten Packungslagen 2, 3.

## Patentansprüche

1. Packung für den Wärme und/oder Stoffaustausch zwischen Flüssigkeiten und Gasen in Kolonnen (4), wobei das Packungsbett einzelne Packungslagen aufweist, **dadurch gekennzeichnet, dass** in den Packungen die Bleche unterschiedliche Dicken aufweisen.

2. Packung nach Anspruch 1, **dadurch gekennzeichnet, dass** tragende Bleche einer Packungslage eine größere Dicke aufweisen.

3. Packung nach Anspruch 1, **dadurch gekennzeichnet, dass** in mindestens einer Packungslage (1) die Bleche unterschiedliche Dicken aufweisen.

4. Packung nach einem der vorherigen Ansprüche, **dadurch gekennzeichnet, dass** die Bleche geringerer Dicke eine Dicke von 0,01 bis 0,2 insbesondere von 0,05 bis 0,1 mm und die Bleche (5) größerer Dicke eine Dicke von 0,05 bis 0,5 insbesondere von 0,1 bis 0,2 mm aufweisen.

5. Packung nach einem der vorherigen Ansprüche, **dadurch gekennzeichnet, dass** mindestens die unterste Packungslage (2) und/oder die oberste Packungslage (3) einer Packung Bleche mit größerer Dicke aufweist.
